# EUROPEAN PATENT APPLICATION

(11) **EP 1 895 247 A1**
(43) Date of publication of application: **05.03.2008**
(21) Application number: 06120062.2
(22) Date of filing: 04.09.2006
(51) Int. Cl.: F25B 17/08

(54) **Solid/gas adsorption refrigeration device for continuous cold production and corresponding process**

(71) Applicant: Groupe Simtech S.A., 3321 Berchem (LU)
(72) Inventor: Courte, Marcel, 7534, Mersch (LU); Dusseldorf, Mike, 3333, Hellange (LU); Pansin, Fernand, 7307, Steinsel (LU)
(74) Representative: Kihn, Pierre Emile Joseph

(57) **Abstract**

The present invention proposes a solid/gas adsorption refrigeration device that comprises a gastight casing (12) with an adsorption chamber (14) and a separate desorption chamber (16), an evaporator (18) in fluid communication with the adsorption chamber (14), a return duct (19) connecting the desorption chamber (16) to the evaporator (18) via a condenser (22) and a movable conveying structure (20) that is arranged in the gastight casing (12) and carries solid adsorbent. For enabling continuous cold production, the conveying structure (20) is configured for circulating solid adsorbent cyclically from the adsorption chamber (14) to the desorption chamber (16) and back. An expansion device (24) is arranged in the return duct (19) and a seal arrangement (26) is provided between the adsorption chamber (14) and the desorption chamber (16). The expansion device (24) and the seal arrangement (26) are configured for maintaining, during operation of the device, an absolute pressure in the evaporator (18) that is significantly lower than the absolute pressure in the desorption chamber (16).

## Description

### Technical field

The present invention generally relates to the field of sorption refrigeration and, more particularly, to a device and a process for continuous cold production by means of solid/gas adsorption.

### Background Art

In the field of refrigeration plants, absorption refrigeration machines are well known. They are based on the absorption refrigeration process using a pair of liquid absorbent and gaseous/liquid adsorbate, e.g. water and lithium bromide (H₂O/LiBr). Such liquid/gas absorption machines usually have no moving parts, the energy being supplied by a heat source. Despite their energy-efficiency, these machines have the drawback of operating only at pressures below atmospheric such that leak tightness is of paramount importance. Hence, low tolerable leakage rates result in considerable initial and maintenance costs of liquid/gas absorption machines, especially when they are designed for producing cold at temperatures below 0°C. Furthermore, these machines usually require a heat source temperature (e.g. hot water inlet temperature) of at least 85°C, temperatures above 100°C being normally required, for reasonably economical operation. Hence, these devices cannot be used efficiently with some regenerative heat sources such as solar panels or with sources of waste heat at low temperatures. Due to such operational and constructional requirements, use of this kind of refrigeration machines is basically limited to large-scale industrial applications.

In addition to the known absorption process, the adsorption process has gained increased interest because of its energy-efficiency. Depending on the used pair of adsorbate/adsorbent, an adsorption process is not subject to the above vacuum requirements and/or temperature limitations. Different kinds of adsorption refrigeration devices (or heat pumps) for solid/gas adsorption are known in the art. In its simplest form, an adsorption refrigeration device comprises two containers connected by a conduit. One container is an evaporator/condenser and the other container is a reactor in which adsorption/desorption can take place. The reactor contains a solid adsorbent whereas both containers contain part of the refrigerant/adsorbate. To illustrate an operation cycle, let both containers initially be at low pressure and temperature. The adsorbent in the reactor holds a large concentration of refrigerant/adsorbate whereas the evaporator/condenser may contain a remaining amount of gaseous refrigerant/adsorbate. The adsorbent in the reactor is then heated in order to regenerate the adsorbent by desorption of the refrigerant/adsorbate. The system pressure rises. The desorbed refrigerant/adsorbate condenses in the evaporator/condenser whereby heat is rejected to the environment. To finish regeneration, the reactor is cooled back. After regeneration, the adsorbent adsorbs refrigerant/adsorbate whereby the system pressure decreases and the liquid part of the refrigerant/adsorbate in the evaporator/condenser evaporates and extracts heat from the environment of the evaporator/condenser so as to produce a refrigeration effect. After adsorption is completed, the above cycle can repeat. A valve is usually installed in the conduit connecting the reactor and the evaporator/condenser for controlling the process.

Compared to conventional vapour compression refrigeration cycles, the adsorbent acts as a "chemical compressor" that is driven by heat. Hence, both the compressor used in a conventional vapour compression cycle as well as its required mechanical work input can be eliminated. In other words, just like absorption refrigeration devices, adsorption refrigeration devices enable cold production using heat as energy source. The major drawback of the above simple adsorption refrigeration devices is that they can only operate intermittently i.e. discontinuously. Therefore, use of these adsorption devices is basically limited to non-continuous applications using energy storage. Pseudo-continuous operation can only be achieved with this type of device when using a two-fold infrastructure operating out-of-phase.

US 4,478,057 discloses a different type of solid/gas adsorption refrigeration device adapted for continuous cold production. This device comprises a gastight casing including an adsorption section and a desorption section, an evaporator connected to the adsorption section and a return duct connecting the desorption section to the evaporator. A condenser is arranged in the return duct upstream of the evaporator. The device according to US 4,478,057 further comprises a movable endless conveying structure including carriers for solid adsorbent. The conveying structure is arranged in the gastight casing and configured for circulating solid adsorbent cyclically between the adsorption and desorption sections.

The main advantage of the system according to US 4,478,057 is that it enables continuous cold production. This is achieved by dividing the reactor into two separate desorption and adsorption sections and using a conveying structure that cycles the adsorbent between the desorption and the adsorption section. The system according to US 4,478,057 does have shortcomings however. Besides the adsorbent and the refrigerant/adsorbate, it uses an inert gas to reduce the partial pressure of the refrigerant/adsorbate in order to enable evaporation of the refrigerant/adsorbate in the evaporator. Use of this inert gas imposes practical limitations both on the minimum temperature at which cold can be produced at the evaporator for a given regeneration temperature, and on the overall refrigerating capacity for a given system size. Furthermore, a lower refrigeration temperature requires a lower partial pressure of the refrigerant/adsorbate which in turn results in a reduction of the refrigerating capacity. Hence this system cannot provide for efficient refrigeration at low temperatures. Furthermore, in order to allow partial pressure reduction by means of the inert gas, a special semi-permeable filter, permeable to the inert gas but impermeable to the refrigerant/adsorbate, needs to be installed in an additional connection conduit between the desorption section and the return duct upstream of the evaporator.

### Technical problem

It is an object of the present invention to provide a solid/gas adsorption refrigeration device for continuous cold production and a corresponding process, which allow energy-efficient production of cold at low temperatures.

### General Description of the Invention

To achieve this object, the present invention proposes a solid/gas adsorption refrigeration device that comprises a gastight casing with an adsorption chamber and a separate desorption chamber, an evaporator in fluid communication with the adsorption chamber, a return duct connecting the desorption chamber to the evaporator via a condenser and a movable conveying structure that is arranged in the gastight casing and carries solid adsorbent. For enabling continuous cold production, the conveying structure is configured for circulating solid adsorbent cyclically from the adsorption chamber to the desorption chamber and back. Further according to the invention, an expansion device is arranged in the return duct and a seal arrangement is provided between the adsorption chamber and the desorption chamber, both for maintaining, during operation of the device, an absolute pressure in the evaporator that is significantly lower than the absolute pressure in the desorption chamber.

Whereas the system known from US 4,478,057 operates at uniform overall internal pressure, the expansion device and the seal arrangement according to the present invention allow maintaining a significant absolute pressure difference between the evaporator and the desorption chamber. By enabling evaporation of the refrigerant/adsorbate at a significantly lower pressure, without the need for partial pressure reduction by means of an inert gas, the present invention allows cold production at temperatures that can be very low compared to the condensation or heat source temperature. As will be understood, the evaporation pressure determines the evaporation temperature and hence the temperature of cold production. Furthermore, the device complexity is reduced since there is no need for partial pressure reduction by means of inert gas and the related components.

Provided a suitable refrigerant/adsorbate is used, the respective pressures in both chambers are above atmospheric even for cold production at temperatures « 0 °C. Thereby, device construction and maintenance is rendered less expensive when compared to typical continuous absorption machines. As opposed to typical intermittent adsorption machines, the separation of the reactor into two separate chambers in combination with the use of a conveying structure for transporting the adsorbent between these chambers, enable uninterrupted cold production. Furthermore, the device allows to take advantage of the intrinsic process heat generated during (exothermal) adsorption since this heat does not need to be eliminated but is transferred with the adsorbent-adsorbate complex into the desorption chamber where it contributes to heat-induced desorption.

In a preferred embodiment, the movable conveying structure comprises a ring-shaped rotor which is mounted rotatably in the casing and protrudes, at least partially, into both the adsorption chamber and the desorption chamber. The rotor comprises the solid adsorbent, preferably in axial cavities containing a porous or open celled substrate that supports the solid adsorbent.

Advantageously, the casing comprises two annular guiding sectors and the seal arrangement comprises O-ring joints fixed to the ring-shaped rotor in radially surrounding manner. In this case, the ring-shaped rotor can be held rotatable by these guiding sectors which connect the adsorption chamber and the desorption chamber whereas the O-ring joints attached to the rotor seal the clearance between the rotor and the guiding sectors so as to hermetically separate the adsorption chamber from the desorption chamber. In this embodiment, the rotor preferably comprises egui-circurnferentially distributed spokes on which the O-ring joints are fixed. In other words, the O-ring joints are fixed between the cavities on the rotor. Regarding the spokes, the radian measure between two adjacent spokes is preferably less than or equal to half the radian measure of the shortest annular guiding sector. Thereby, it is ensured that the joints of at least two spokes seal the passage through the guiding sectors against pressure loss, independently of the rotational position of the rotor.

In a preferred embodiment, the expansion device comprises an electronic expansion valve for facilitating process control. Preferably, a pulse width modulating electronic expansion valve is used, e.g. when the evaporator is operated in dry evaporator mode. In some instances, an externally equalised thermostatic expansion valve may also be used. Other devices for maintaining a pressure difference are however not excluded. In the return duct upstream of the expansion device, the device preferably further comprises a buffer tank. It should be noted that the return duct may take the form of a conventional pipe conduit but could also be provided otherwise, e.g. in the form of an internal channel formed integrally with the gastight casing.

For achieving a more compact construction, the evaporator can be arranged inside the adsorption chamber so as to be an integral part of the latter. Therefore, the absolute pressure in the adsorption chamber equals the evaporation pressure Pe. Alternatively, the evaporator may also be arranged as separate structural part connected in fluid communication to the adsorption chamber, e.g. in case an evaporator available off-the-shelf is used in the device.

The device can comprise ammonia (NH₃) as refrigerant/adsorbate and an alkaline earth metal salt or a transition metal salt as solid adsorbent. Especially, a halide salt such as barium chloride (BaCl₂) is preferred.

The solid/gas adsorption refrigeration device according to the invention is adapted to carry out a process for continuous cold production with the simultaneous steps of:
- evaporating refrigerant/adsorbate in the evaporator and adsorbing refrigerant/adsorbate by means of adsorbent in the adsorption chamber at an evaporation pressure Pe;
- bringing adsorbent with adsorbed adsorbate from the adsorption chamber to the desorption chamber by means of a conveying structure;
- desorbing adsorbate in the desorption chamber at a condensation pressure Pc by means of heat supply;
- condensing refrigerant/adsorbate by means of a condenser at the condensation pressure Pc; and
- returning the refrigerant/adsorbate to the evaporator after expansion to the evaporation pressure Pe by means of an expansion device.
According to the process of the invention, the pressure Pe in the evaporator is significantly lower than the pressure Pc in the desorption chamber. The pressure difference being normally at least 2 bar and preferably at least 4 bar.

The device and process according to the invention are particularly suitable in the field of building services engineering, e.g. for building air-conditioning systems. They allow efficient and uninterrupted refrigeration using solar panels (e.g. delivering heat at 50-60 °C) as energy source for the required desorption heat. It should be noted that in this case, as opposed to using solar energy for heating purposes, there is an optimal correspondence between the need for refrigeration and the availability of solar energy. The device/process can also be used in other applications such as industrial refrigeration, preferably using a waste or regenerative heat source for ecological reasons. They are also suitable for use in automotive air-conditioning or refrigerated trucks/wagons, using waste heat of a combustion engine instead of mechanical work as energy source.

### Brief Description of the Drawings

A preferred embodiment of the invention will now be described, by way of example, with reference to the accompanying drawings in which:
Fig.1 is a block schematic diagram of a solid/gas adsorption refrigeration device according to the invention;
Fig.2 is a top view partially showing an embodiment of the solid/gas adsorption refrigeration device;
Fig.3 is a cross-sectional view according to line III-III of Fig.2, showing a desorption chamber and an adsorption chamber;
Fig.4 is a block schematic diagram showing details of a return duct connecting the desorption chamber to the adsorption chamber in the device according to Figs.1-3;
Fig.5 is a cross-sectional view according to line V-V of Fig.2, showing a seal arrangement;
Fig.6 is a top view showing the casing of the device according to Fig.1;
Fig.7 is a cross-sectional view according to line VII-VII of Fig.2, showing a drive unit for the conveying structure;
Fig.8 is a pressure-temperature (PT) diagram, illustrating the coexistence curve separating the liquid (L) and gaseous (G) phases of ammonia (NH₃) used as refrigerant/adsorbate and the isostere of the complex BaCl₂.X(NH₃) separating the adsorption (A) from the desorption (D) region, barium chloride being used as adsorbent.

Further details and advantages of the present invention will be apparent from the following detailed description of a not limiting embodiment, in which identical reference signs are used to refer to identical elements in the figures throughout.

### Detailed Description of a Preferred Embodiment

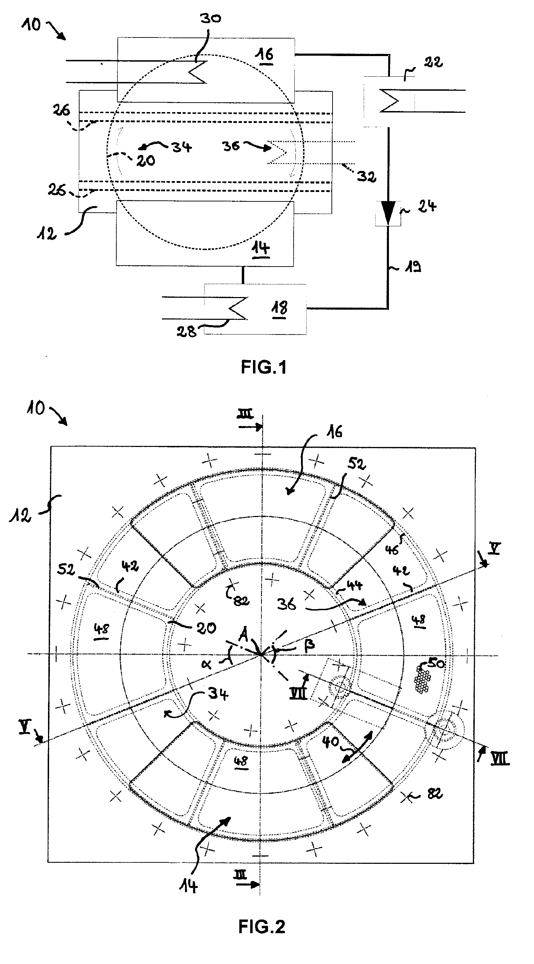

Fig.1 schematically illustrates a solid/gas adsorption refrigeration device for continuous cold production, generally identified by reference numeral 10. The device 10 includes a gastight casing 12 with an adsorption chamber 14 and a desorption chamber 16 arranged therein. An evaporator 18 is directly connected to the adsorption chamber 14 or arranged therein. The desorption chamber 16 is also connected to the evaporator 18, via a return duct 19.

A movable conveying structure 20 that carries a solid adsorbent is arranged inside the gastight casing 12. The conveying structure 20 is configured for circulating solid adsorbent cyclically from the adsorption chamber 14 to the desorption chamber 16 and from there back to the adsorption chamber 14. The conveying structure 20 will be described in more detail below, with reference to Figs.2-3, 5 and 7.

Fig.1 also illustrates a condenser 22 arranged in the return duct 19 and an expansion device 24 arranged in the return duct 19 downstream of the condenser 22 and upstream of the evaporator 18. Furthermore, a seal arrangement, schematically indicated at 26, is arranged in the gastight casing 12. The seal arrangement 26 is arranged between the adsorption chamber 14 and the desorption chamber 16 and configured for maintaining a pressure difference ΔP between the respective absolute pressures in both chambers 14, 16. The absolute pressure in the evaporator 18 equals the absolute pressure in the adsorption chamber 14 since there is no restriction to the fluid communication there between. In fact, the evaporator 18 may be built integrally with the adsorption chamber 14, as described further below. A first heat exchanger 28 is arranged in thermal communication with the evaporator 18. In operation, the first heat exchanger 28 is used for cold production, heat being extracted from a coolant by virtue of evaporation in the evaporator 18. The heat exchanger 28 can be connected to the cooling circuit of a device that requires continuous cooling. Examples are industrial or domestic refrigerators and air conditioning system for buildings or vehicles. A second heat exchanger 30 is arranged in thermal communication with the desorption chamber 16. In operation, the second heat exchanger 30 supplies the heat energy required for regenerating the adsorbent. More precisely, the second heat exchanger 30 allows to heat that part of the adsorbent which is in the desorption chamber 16 or, more precisely, moved there through by the conveying structure 20. The heat exchanger 30 can be connected to a heat source, preferably a source of regenerative heat or waste heat such as a solar collector arrangement or a combustion heat recovery cycle. Optionally and only if required due to operative or constructive requirements, a further heat exchanger 32 may be provided for cooling back the adsorbent on the conveying structure 20 after regeneration. The optional heat exchanger 32 can be connected to the coolant circuit upstream of the cold production heat exchanger 28 or to the same coolant source as the condenser 22, if the latter two differ, for example.

It will be appreciated that the expansion device 24 together with the seal arrangement 26 enable maintaining an adsorption/evaporation pressure in the adsorption chamber 14 and in the evaporator 18 that is significantly lower than the desorption pressure in the desorption chamber 16. Furthermore, it should be noted that the seal arrangement sealingly delimits a first and a second transition zone 34, 36 inside the casing 12, between the adsorption chamber 14 and the desorption chamber 16.

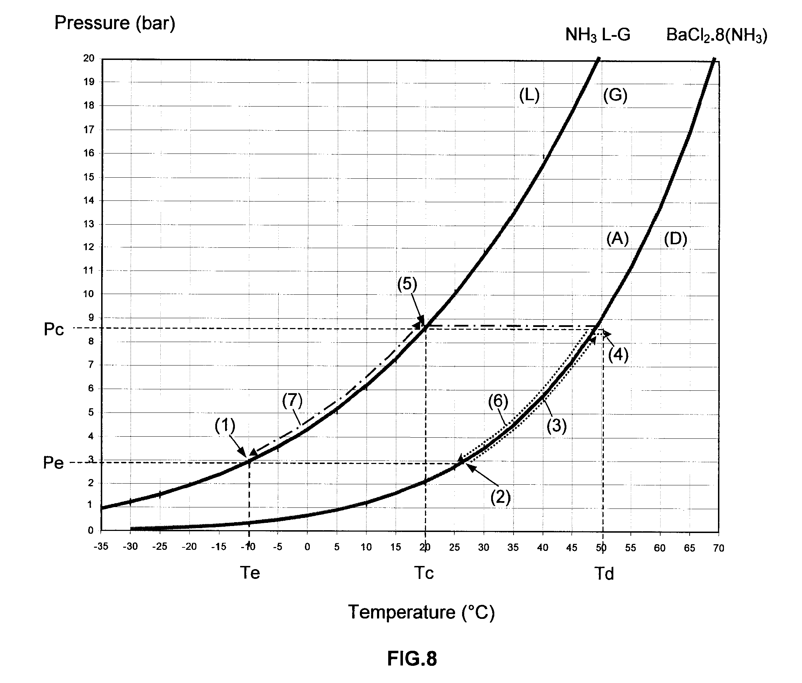

The continuous operation of the solid/gas adsorption refrigeration device 10 will now be described in general using the PT diagram of Fig.8 and referring to structural elements of Figs.1-7. Since the refrigeration process is continuous, the following description will refer to a cycle during which the conveying structure 20 circulates some solid adsorbent (e.g. barium chloride: BaCl₂) and start with a part of the adsorbent located in the adsorption chamber 14. It will be understood that the saturation pressure Pe of refrigerant/adsorbate (e.g. ammonia: NH₃) in the evaporator 18 corresponds to the absolute pressure in both the evaporator 18 and the adsorption chamber 14, since there is no other gaseous media. This pressure Pe is dictated by the temperature at which cold production is desired, i.e. the temperature Te at which evaporation takes place. Hence, liquid refrigerant/adsorbate in the evaporator 18 evaporates at pressure Pe and temperature Te, as indicated at (1). At this point (1), cold production is achieved by extracting heat from coolant in the heat exchanger 28. The adsorption chamber 14 is filled with gaseous refrigerant/adsorbate at pressure Pe. The solid adsorbent that is currently conveyed through the adsorption chamber 14 binds part of this gaseous refrigerant/adsorbate by adsorption, indicated at (2). It may be noted that the adsorbent, after entering the adsorption chamber 14 may decrease in temperature to some extent, due to the low temperature Te of the refrigerant/adsorbate gas in this chamber 14, whereas, before exiting the adsorption chamber 14, it may release some heat due to the exothermal adsorption reaction.

The adsorbent/adsorbate complex (BaCl₂.X(NH₃)) created by adsorption is then transported on the conveying structure 20 out of the adsorption chamber 14 into the first transition zone 34. The first transition zone 34 forms a closed system through which the adsorbent/adsorbate complex is transported by the conveying structure 20. The major part of the exothermic adsorption reaction heat is released within the first transition zone 34. Thereby, the temperature and pressure of the complex in the transition zone 34 increase isosterically, according to arrow (3). Optionally, an additional heat supply may be provided at the transition zone 34 in order to support the isosteric heat/temperature increase according to arrow (3) and reduce the heat supply required at the desorption chamber 16. Subsequently, the adsorbent including the bound adsorbate is brought into the desorption chamber 16 by the conveying structure 20.

In the desorption chamber 16, heat is transferred to the adsorbent/adsorbate complex (BaCl₂.X(NH₃)), according to arrow (4), at temperature Td. This is provided from an external heat source using the heat exchanger 30. By virtue of the heat supply, the complex is decomposed (region (D), i.e. the adsorbate is desorbed from the adsorbent. For efficiency reasons, the heat supply (4) is preferably regulated to achieve full regeneration of the adsorbent before the latter leaves the desorption chamber 16 on the conveying structure 20, without excessively heating the latter and the adsorbent. In other words, all of the bound adsorbate is preferably released in the desorption chamber 16.

From the desorption chamber 16, desorbed adsorbate flows to the condenser 22 via return duct 19. The pressure inside the desorption chamber 16 is given by the pressure saturation Pc at which condensation of the refrigerant/adsorbate takes place in the condenser 22 as indicated at point (5). In fact, the saturation pressure Pc is dictated by the desired condensation temperature Tc of the refrigerant/adsorbate. Subsequently, the regenerated adsorbent is conveyed from the desorption chamber 16 into the second transition zone 36 where it cools back passively or forcedly (e.g. using an optional heat exchanger 32) according to arrow (6). Meanwhile, desorbed refrigerant/adsorbate is condensed to its liquid phase in the condenser 22 at pressure Pc. Liquid refrigerant/adsorbate, subjected to cooling and expansion according to arrow (7), is fed back to the evaporator 18 by means of the expansion device 24 downstream of the condenser 22. The return duct 19 allows to compensate for the loss of adsorbed refrigerant/adsorbate carried with the adsorbent on the conveying structure 20 to the desorption chamber as described above. With the refrigerant/adsorbate in the evaporator 18 being in the condition indicated at point (1) and the adsorbent on the conveying structure 20 being out of equilibrium at point (2), the above cycle can be reiterated with respect to the considered part of adsorbent. It will be appreciated however, that the process illustrated above is indeed taking place continuously for every sector of the conveying structure 20 respectively . In fact, adsorbent being distributed over the entire conveying structure 20, evaporation and adsorption, regeneration and condensation take place simultaneously for different parts of the solid adsorbent and the liquid or gaseous refrigerant/adsorbate respectively at different locations within the device 10.

Examples of parameters of the process for continuous cold production using the solid/gas adsorption refrigeration device 10 are:

### Example 1 (e.g. cold production for cold store / freezer):

| | |
|---|---|
| Temperature of desorption heat supply: | 50 °C |
| Refrigerant/adsorbate: | ammonia (NH₃); |
| Adsorbent: | barium chloride (BaCl₂); |
| Condensation temperature / pressure: | Tc = 20°C / Pc = 8,57bar; (cf. Fig.8) |
| Evaporation temperature / pressure: | Te = -10°C / Pe = 2,9bar; (cf. Fig.8) |
| Mass of refrigerant/adsorbate: | 1 kg (NH₃); |
| Mass of adsorbent: | 1,53kg (BaCl₂); |
| Adsorption heat rejection¹: | Q_{A}= 0,583kWh/kg(NH₃) at 25°C; |
| Desorption heat supply²: | Q_{D} = 0,752kWh/kg(NH₃) at 50°C; |
| Condensation heat rejection: | Q_{c}= 0,376kWh/kg(NH₃) at 20°C; |
| Evaporation heat absorption³: | Q_{E}= 0,342kWh/kg(NH₃) at-10°C; |
| COP (Coefficitent Of Performance) ⁴: | 0,59; |
| Cycle rate: | 1 /60 Hz; |
| refrigerating capacity⁵: | 19,44 kW at 1 /60 Hz. |
| Remarks: | |
| 1: part of which is used to support regeneration; | |
| 2: including losses caused by the desorption chamber; | |
| 3: including losses caused by the evaporator/adsorption chamber; | |
| 4: estimated value including advantage taken of exothermal adsorption heat (power supply for the condenser and for the conveying structure being insignificant); | |
| 5: is function of the cycle rate and can be varied accordingly. | |

Example 2 (e.g. cold production for air conditioning):

| | |
|---|---|
| Temperature of desorption heat supply: | 55°C |
| Refrigerant/adsorbate: | ammonia (NH₃); |
| Adsorbent: | barium chloride (BaCl₂); |
| Condensation temperature / pressure: | Tc = 30°C / Pc = 11,69bar; |
| Evaporation temperature / pressure: | Te = 6°C / Pe = 5,35bar; |
| Mass of refrigerant/adsorbate: | 1 kg (NH₃); |
| Mass of adsorbent: | 1,53kg (BaCl₂); |
| Adsorption heat rejection¹: | Q_{A}= 0,569kWh/kg(NH₃) at 25°C; |
| Desorption heat supply²: | Q_{D} = 0,738kWh/kg(NH₃) at 55°C; |
| Condensation heat rejection: | Q_{C} = 0,363kWh/kg(NH₃) at 30°C; |
| Evaporation heat absorption³: | Q_{E}= 0,310kWh/kg(NH₃) at 6°C; |
| COP (Coefficitent Of Performance) ⁴: | 0,58; |
| Cycle rate: | 1/60 Hz; |
| refrigerating capacity⁵: | 18,59 kW at 1/60 Hz. |
| Remarks: see Example 1 | |

As will be appreciated from the above examples, the device 10 and the according process allow efficient cold production using a supply of heat energy at low temperatures, even below 60 °C. Furthermore, it will be appreciated that the device 10 and the according process take advantage of the exothermal heat produced by the adsorption reaction for supporting desorption and thereby enable an increased COP.

As will further be understood, efficiency of the above process for continuous cold production depends among others on maintaining the pressure Pe low compared to the pressure Pc. It may be noted that this pressure difference also provides self-sustained backflow of the refrigerant/adsorbate from the desorption chamber 16 to the adsorption chamber 14. A preferred embodiment achieving this effect will be detailed below with reference to Figs. 2-7.

Fig.2 shows the solid/gas adsorption refrigeration device 10 with some internal parts being revealed by dashed lines in the top view. The adsorption chamber 14 and the desorption chamber 16 are diametrically opposed in the rectangular gastight casing 12. As further seen in Fig.2, the conveying structure 20 is arranged inside the casing 12. The conveying structure 20 has the shape of a ring-plate like rotor 20, i.e. a circular disc with a centred circular cut-out. The casing 12 is provided with an annular passage 40 which defines an endless cyclical path for the rotor 20. The ring-shaped rotor 20 is rotationally symmetrical and rotatably mounted in the casing 12 with respect to its central axis A (perpendicular to the plane of Fig.2). The rotor 20 comprises a plurality of equi-circumferentially distributed spokes 42 connecting an inner rim 44 to an outer rim 46 of the rotor 20. The rotor 20 defines a plurality of axial cavities 48 extending between the spokes 42 in the direction perpendicular to the plane of Fig.2. Within each axial cavity 48 the rotor 20 holds an inert porous or open celled substrate, e.g. a honeycomb support structure 50 (only partially shown) which provides a high exposed surface to volume ratio. The exposed surface of the honeycomb substrate 50 is coated or impregnated with a solid adsorbent material, such as barium chloride (BaCl₂). In fact, the solid adsorbent should be accessible over a large area for gas adsorption and for heat absorption. Other inert porous substrates for holding the solid adsorbent, such as activated carbon or exfoliated graphite as acknowledged in US 5,408,847 or open celled substrates such as a sintered metal or metallic foam for example can be used to this effect. The adsorbent can be fixed to the substrate 50 by means of wetting techniques or any other suitable technique. It will be understood that a substrate 50 and fixation technique of the solid adsorbent will be chosen which are suitable for minimizing the known detrimental effects caused by the characteristic adsorbent volume changes (shrinking and swelling) during adsorption and desorption.

Hence, the adsorbent is distributed over a relatively large exposed surface throughout the cavities 48 of the rotor 20. As seen in Fig.2, the rotor 20 protrudes simultaneously into the adsorption chamber 14 and into the desorption chamber 16. Due to the porosity of the substrate 50, the adsorbent contained in the cavity/cavities 48 currently located inside the adsorption chamber 14 is exposed to refrigerant/adsorbate in gaseous phase (not shown) so as to enable adsorption. Furthermore, the adsorbent contained in the cavity/cavities 48, which are currently located inside the desorption chamber 16, is exposed to heat originating from an external heat source connected to the heat exchanger 30 for achieving desorption.

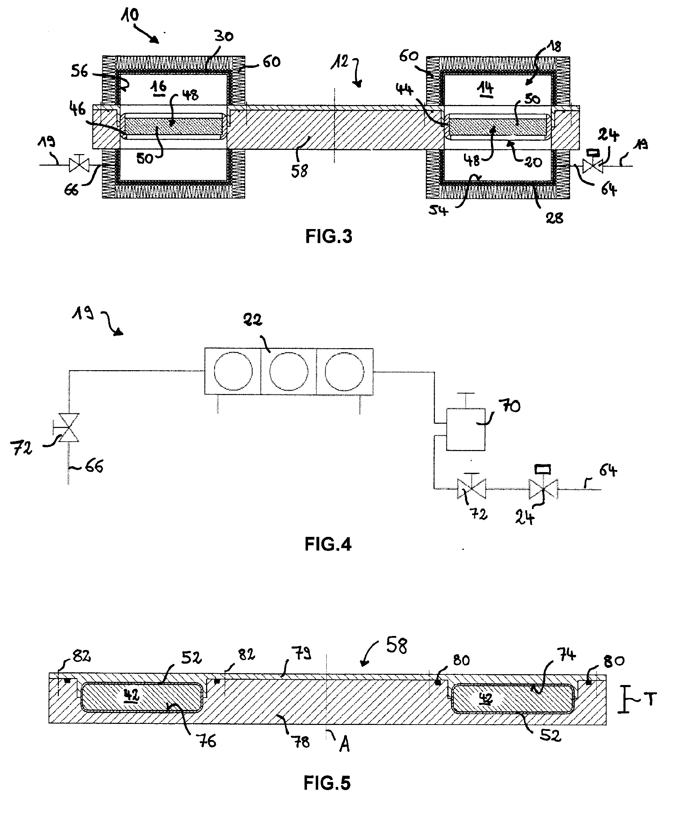

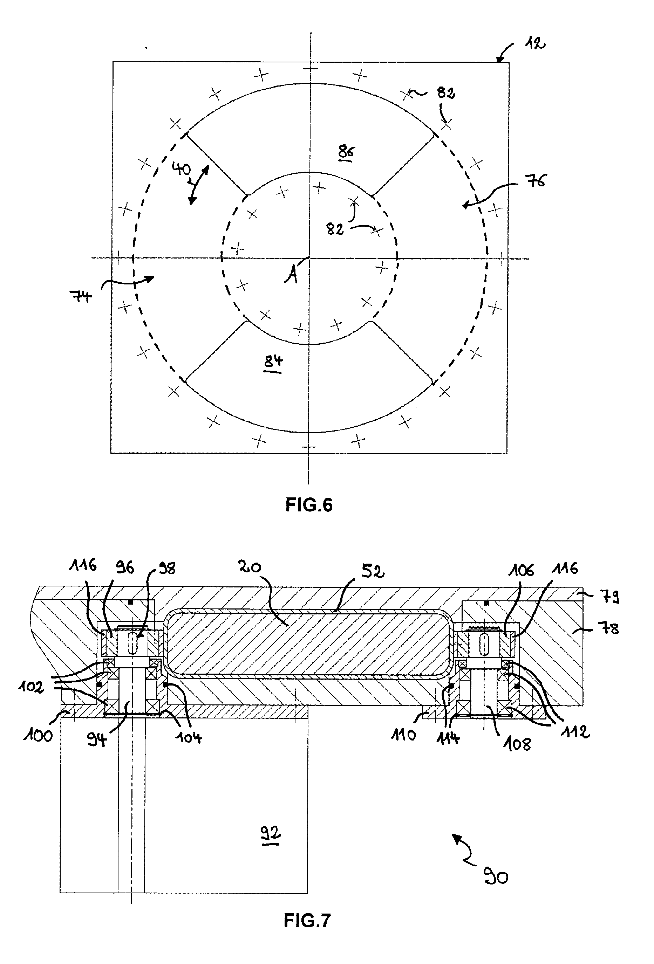

Fig.2 also shows a seal arrangement that comprises, at each spoke 42 respectively, an O-ring joint 52 that is fixed to and surrounds the rotor 20 in radial manner. The O-ring joints 52 ensure that there is a pressure resistant seal between the desorption and adsorption chambers 14, 16 in each transition zone 34, 36 in order to maintain the pressure difference ΔP=Pc-Pe. Of course other types of seals can be used to this effect. Each transition zone 34, 36 respectively defines an annular guiding sector holding the ring-shaped rotor 20 between the adsorption and desorption chambers 14, 16 (see Fig.3 & Fig.6). The radian measure α between two adjacent spokes 42 is less than or equal to half the radian measure β of the annular guiding sectors defined by the transition zones 34, 36 (1/2 β ≥ α). Thereby, it is ensured that two O-ring joints 52 are redundantly sealing the passage 40 in the transition zone 34 and 36 at any rotational position of the rotor 20. Furthermore, as appears from Fig.2, there is always respectively at least one cavity 48 containing adsorbent that is hermetically isolated from the respective atmospheres of the adsorption and desorption chambers 14, 16 within each transition zone 34, 36. It may be noted that seals, such as the O-ring joints 52, which are fixed to the rotor 20 and rotate with the latter are preferred because they avoid leakage and frictional wear that would be caused by the porous/open celled support structure 50 with seals fixed to the casing 12. In order to facilitate mounting the seals 52, the rotor 20 is preferably designed as assembled element consisting at least of two connectable sectors. The constituent material of the rotor 20, including spokes 42 and inner and outer rims 44, 46, preferably has very low thermal conductibility, so as to minimize unwanted heat transfer between the adsorption and desorption chambers 14, 16 via the rotor 20, and a low thermal expansion coefficient, in order to reduce thermally induced deformation of the rotor 20. A ceramic or plastic material may be used for example.

Fig.3 shows the configuration of the adsorption chamber 14 and the desorption chamber 16. Although it is not excluded that the evaporator 18 indicated in Fig.1 can be arranged as a separate structural component the evaporator 18 is an integral part of the adsorption chamber 14 in the present embodiment. In other words, the refrigerant/adsorbate is evaporated directly in the adsorption chamber 14. The adsorption and desorption chambers 14, 16 are respectively delimited by pairs of wall members 54, 56 fixed perpendicularly to a frame 58 of the casing 12. The frame 58 is made of a material having very low thermal conductibility so as to minimize unwanted heat transfer between the adsorption and desorption chambers 14, 16 via the frame 58. To the same effect and furthermore to avoid heat losses, thermal insulation material 60 is fixed externally to the wall members 54, 56 of each chamber 14, 16. As further seen in Fig.3, the heat exchangers 28, 30 associated respectively to the evaporator 18 or the desorption chamber 16 comprise serpentine tubes enveloping the wall members 54, 56. The wall members 54, 56 are made of material with high thermal conductibility.

As appears from Fig.3, the adsorbent fixed to the porous/open celled substrate 50 within the cavities 48 currently located inside the chambers 14, 16 are exposed to the respective atmosphere. As further seen in Fig.3, an inlet 64 is provided at the adsorption chamber 14/evaporator 18 for receiving refrigerant/adsorbate from the return duct 19. Similarly, an outlet 66 is provided at the desorption chamber 16 for feeding back desorbed adsorbate to the return duct 19.

Fig.4 shows structural elements arranged in the return duct 19. The condenser 22 is arranged downstream of the outlet 66. The condenser 22 may be a fan operated aero-condenser for condensing the refrigerant/adsorbate using air at ambient temperature for example. The condenser 22 is designed and operated to ensure complete liquefaction and sufficient cooling of the refrigerant/adsorbate. Downstream of the condenser 22 a buffer tank 70 is provided for storing a given quantity of liquid refrigerant/adsorbate in order to allow refrigeration capacity adjustment and compensation of eventual minor leakages. Furthermore, the return duct 19 also comprises shutoff valves 72 for maintenance purposes.

Downstream of the buffer tank 70 and upstream of the inlet 64 to the evaporator 18, the return duct 19 comprises an expansion device 24. The expansion device 24 is for example a pulse width modulating electronic expansion valve. The latter type is particularly useful when the evaporator 18 is operated in dry evaporator mode and presents among others the advantage that this type of valve is relatively independent of the pressure difference such that the range of operable pressures is increased (Pe, Pc). Other suitable expansion devices having the effect of a pressure reducing regulator are not excluded, e.g. if the evaporator 18 is operated in flooded evaporator mode. The expansion device 24 lowers the pressure of the liquefied refrigerant/adsorbate to the evaporation pressure Pe.

Fig.5 shows details of the rotor 20, the seal arrangement comprising the O-ring joints 52 and details of the construction of the gastight casing 12. As seen in Fig.5, the rotor has a thickness T determining the depth of the cavities 48 (see Fig.3). Depending on the required exposed surface and mass of the adsorbent, the thickness T may be varied and may exceed the radial width of the rotor 20. However, for facilitating heat transfer and adsorption, it is preferred that the surface (see Fig.2) to depth (T) ratio of the cavities 48 is comparatively high.

The O-ring joints 52 shown in Fig.5 are fixed to the rotor 20 so as to radially surround the rotor 20 at the level of a corresponding spoke 42. The cross-section of the annular guiding sectors 74, 76 defined by the transition zones 34, 36 in the casing 12, is conjugated to that of the O-ring joints 52 at the respective spoke 42 in uncompressed state but slightly smaller for exerting a pressure on the O-ring joints 52 in order to ensure gastight sealing in the direction perpendicular to the plane of Fig.5. On the other hand, the inner contour of the guiding sectors 74, 76 is conjugated to the ring-shaped rotor 20 but slightly larger to allow unimpeded rotation. The constituent material of the rotor 20 is impermeable to the (gaseous phase of) the refrigerant/adsorbent at least at the level of the spokes 42. The pressure exerted onto the O-ring joints 52 is chosen to be sufficient for the seal arrangement to withstand significant pressure differences e.g. in the order of several bar,e.g. > 4bar. Due to the rounded off cross-sections seen in Fig.5, sealing is improved and excessive wear is avoided.

As further seen in Fig.5, the frame 58 of the gastight casing 12 is made as a two part assembly comprising a base component 78 and a lid component 79 of conjugated shape. Each component 78, 79 defines one half-section of the guiding sectors 74, 76 (see Fig.5) as well as the recesses for the chambers 14, 16 (see Fig.3 and Fig.6). Circumferential seals 80 are provided between the components 78, 79 for sealing the gastight casing 12 against pressure loss. Fig.5 further shows the radial location of fixture points 82 (see Fig.2 and Fig.6) at which the components 78, 79 are strongly attached to each other, e.g. by means of screws, for resisting the considerable internal pressures (Pe, Pc).

Fig.6 shows the frame 58 of the gastight casing 12 in top view. As seen in Fig.6, the components 78, 79 of the frame 58 comprises recesses 84 and 86 which define, together with the wall members 54, 56 (see Fig.3) the adsorption and desorption chambers 14, 16 respectively. Fig.6 also indicates the guiding sectors 74, 76 and the plurality of fixture points 82 arranged in circles radially delimiting the cyclical passage 40. As will be appreciated, from Figs.5 and 6, the guiding sectors 74, 76 serve as slide bearings holding the rotor 20 such that it can rotate about its central axis A by gliding inside the casing 12 through the guiding sectors 74, 76.

Fig.7 shows a drive unit 90 operatively associated to the rotor 20. The drive unit 90 comprises a variable speed drive 92 (shown schematically) coupled to a drive shaft 94 on which a drive roller 96 is mounted e.g. by means of a feather key fixation 98. The drive shaft 94 is supported rotatable by means of ball bearings 102. The bearings 102 are attached to a first mounting flange 100 fixed to the base component 78 of the frame 58. The mounting flange 100 as well as at least the outermost ball bearing 102 are sealingly fixed to the casing 12 by means of seals 104. As shown in Fig.7, the mounting flange 100 may also support the drive 92. As further seen in Fig.7, an additional counter-roller 106 is mounted on a countershaft 108 on the opposite side of the rotor 20. In a manner similar to the drive shaft 94, the countershaft 108 is supported rotatable by means of ball bearings 112. The bearings 112 are supported on the base component 78 using a second mounting flange 110. Furthermore, the bearings 112 and the second flange 110 are also sealingly mounted to the casing 12 using seals 114. As will be appreciated, both rollers 96 and 106 are provided with a resilient roller rim 116, e.g. made of rubber. During rotation, the roller rims 116 engage the inner and outer rim 44, 46 of the rotor 20 and avoid damage to the O-ring joints 52 when the latter pass the location of the drive unit 90 on their passage 40. If required, the rims 116 of the rollers 96 and 106 may be provided with notches adapted to receive the O-ring joints 52, e.g. in case the latter are not sufficiently resilient, during rotation or the rotor 20. As will be appreciated, the drive unit 90 allows imposing different speeds of rotation onto the rotor 20 by virtue of the variable speed drive 92. It will also be appreciated, that the mechanical work to be produced by the drive unit 90 (and the condenser 22) is negligible when compared to the work required by a compressor (and condenser) in classical vapour compression cycles of similar refrigeration capacity.

From the above described preferred design of the solid/gas adsorption refrigeration device 10, it appears that this device is able to maintain a considerable pressure difference of more than 5bar between the desorption chamber 16 and the evaporator 18/adsorption chamber 14. Furthermore, the device is also able to maintain a temperature difference of over 60 °C between both chambers 14, 16.

Process control, i.e. controlling operation of the device 10, is achieved by means of control techniques applied to various parameters. Refrigerating capacity depends on the quantity of refrigerant/adsorbate evaporated per time unit in the evaporator 18. For adjustment of the refrigerating capacity, an adjustable expansion device 24 is used to adjust the quantity of refrigerant/adsorbate delivered to the evaporator 18. In the continuously operating device 10, the quantity of refrigerant/adsorbate evaporated per time unit equals the throughput of the adjustable expansion device 24. Hence, this throughput is measured and adjusted according to the current cold production need using control techniques that are known per se. Furthermore, the cycle rate (speed of rotation) of the rotor 20 may be adjusted accordingly. The cycle rate may also be set at a constant value independently of the current refrigerating capacity, but preferably compatible with maximum refrigerating capacity. Because the cycle rate is adjustable by means of the variable speed drive 92, it can be used as a further independent control parameter. Parameters that are preferably measured for process control include: temperature and pressure in the evaporator 18/adsorption chamber 14 (Pe, Te); temperature and pressure in the desorption chamber 16 (≈Pc, Td); temperature and pressure in the condenser 22 (Pc, Tc); level of liquid refrigerant/adsorbate stored in the buffer tank 70; throughput/output of the expansion device 24. Level measurement in the buffer tank 70 can be used to verify desorption efficiency, e.g. in case the level drops, regeneration is not sufficiently effective and heat energy supplied by the heat exchanger 30 may need to be increased.

It remains to be noted that although the pair barium chloride-ammonia represents a preferred choice for applications which require cooling at low temperatures, it will be understood that other pairs of solid sorbent and liquid/gaseous sorbate are not excluded. Suitable chemisorbents are metal halide salts such as the chlorides BaCl₂, CaCl₂, MnCl₂, NiCl₂, PbCl₂, SrCl₂, ZnCl₂, or bromides such as MgBr₂. Candidate chemisorbates are NH₃, H₂O or CH₃OH and SO₂ for example. The device and process can also be operated with physisorbents/-sorbates. The preferred sorbent media have high affinity for the sorbate, which may exhibit either chemisorption or physisorption, and the preferred sorbates have low boiling temperatures (e.g. <0°C) at pressures above atmospheric.

In conclusion, some of the advantages achieved by the present invention should be recalled:
- Eco-friendliness since efficient cold production is rendered possible using any (waste or regenerative) heat source;
- continuous cold production capability;
- temperatures of cold production <0°C;
- effective operation at low heat input (energy source) temperatures <80°C, even <60°C;
- internal process pressures above atmospheric;
- utilization of the exothermal adsorption heat for supporting desorption (hence increased COP);
- no need for inert gas induced partial pressure reduction of the refrigerant/adsorbate and the related components.

## Claims

1. A solid/gas adsorption refrigeration device for continuous cold production comprising:
a gastight casing including an adsorption chamber and a desorption chamber;
an evaporator associated with said adsorption chamber;
a return duct connecting said desorption chamber to said evaporator;
a condenser arranged in said return duct;
a movable conveying structure carrying solid adsorbent, said conveying structure being arranged in said gastight casing and configured for circulating solid adsorbent cyclically between said adsorption chamber and said desorption chamber;
an expansion device arranged in said return duct and a seal arrangement in said gastight casing between said adsorption chamber and said desorption chamber, said expansion device and said joint arrangement maintaining, during operation, a pressure Pe in said evaporator that is significantly lower than the pressure Pc in the desorption chamber.

2. The adsorption refrigeration device according to claim 1, wherein said movable conveying structure comprises a ring-shaped rotor which is mounted rotatably in said casing so as to protrude at least partially into said adsorption and desorption chambers, said rotor comprising said solid adsorbent.

3. The adsorption refrigeration device according to claim 2, wherein said ring-shaped rotor comprises axial cavities containing a porous or open celled substrate that supports said solid adsorbent.

4. The adsorption refrigeration device according to claim 2 or 3, wherein said casing comprises two annular guiding sectors holding said ring-shaped rotor between said adsorption chamber and said desorption chamber and wherein said seal arrangement comprises O-ring joints fixed to said ring-shaped rotor in radially surrounding manner.

5. The adsorption refrigeration device according to claim 4, wherein said rotor comprises equi-circumferentially distributed spokes on which said O-ring joints are fixed between said cavities, the radian measure between two adjacent spokes being less than or equal to half the radian measure of the shortest annular guiding sector.

6. The adsorption refrigeration device according to any one of claims 1-5, wherein said expansion device comprises an electronic expansion valve, preferably a pulse width modulating electronic expansion valve.

7. The adsorption refrigeration device according to any one of claims 1-6, wherein said evaporator is arranged inside said adsorption chamber.

8. The adsorption refrigeration device according to any one of the preceding claims, further comprising a buffer tank arranged in said return duct upstream of said expansion device.

9. The adsorption refrigeration device according to any one of the preceding claims, further comprising ammonia (NH₃) as refrigerant/adsorbate and wherein said solid adsorbent comprises an alkaline earth metal salt or a transition metal salt, especially a halide salt, barium chloride (BaCl₂) being preferred.

10. Process for continuous cold production using a solid/gas adsorption refrigeration device according to any one of claims 1-9 and comprising the steps of:
- evaporating refrigerant/adsorbate in an evaporator and adsorbing refrigerant/adsorbate by means of adsorbent in an adsorption chamber at an evaporation pressure Pe;
- bringing adsorbent with adsorbed refrigerant/adsorbate from said adsorption chamber to a desorption chamber by means of a conveying structure;
- desorbing refrigerant/adsorbate in the desorption chamber at a condensation pressure Pc by means of heat supply;
- condensing refrigerant/adsorbate by means of a condenser at the condensation pressure Pc; and
- returning refrigerant/adsorbate to the evaporator after expansion to the evaporation pressure Pe by means of an expansion device;
wherein the pressure Pe in the evaporator is significantly lower than the pressure Pc in the desorption chamber.

11. Process according to claim 10, wherein the pressure difference between the evaporator pressure and the desorption pressure is at least 2 bar.
